# EUROPEAN PATENT APPLICATION

(11) **EP 4 378 597 A1**
(43) Date of publication of application: **05.06.2024**
(21) Application number: 22210710.4
(22) Date of filing: 30.11.2022
(51) Int. Cl.: B07B 13/16, B65G 21/20, B65G 47/72, B65G 69/04, B27N 3/18, B27N 3/14, B27N 3/24, B30B 5/06, B30B 15/30, B27N 3/20, B27N 3/22

(54) **APPARATUS AND METHOD FOR SCATTERING MATERIAL ONTO AN ENDLESS BELT, PLANT FOR THE PRODUKTION OF BOARDS AND STAGE OF EXPANSION FOR SUCH APPLICATIONS**

(71) Applicant: Sunds Fibertech AB, 86136 Timra (SE)
(72) Inventor: BIELFELDT, Bernd, 86136 Timrå (SE)
(74) Representative: Hartdegen, Helmut

(57) **Abstract**

The invention refers to an apparatus and a process for scattering material onto an endlessly rotation forming belt to provide a mat. Furthermore the invention refers to a plant for producing boards with such an apparatus and a stage of extension to enhance such apparatuses or plants.

Such an apparatus for scattering material onto an endlessly rotating forming belt to provide a mat or at least one layer of a mat to be pressed into a board has an opening (14) for receiving the material (6) and a mechanical scattering device (2) for the received material (6), which is arranged over the forming belt (1). Furthermore side walls (3) along the working direction (10) of the forming belt (1) are arranged which are movable crosswise to the forming belt to define the width (w) of the mat (5) between the side walls (3). The invention for the apparatus is characterized in that on the other side of the side walls (3) hence the defined width (w) guiding means and/or a conveyor is arranged adjacent to the side walls (3) which are suitable as a removing device for the excess of material (15) outside of the defined width (w) and above the forming belt (1).

## Description

### OBJECT OF THE INVENTION

The invention refers to an apparatus and a method for scattering material onto an endlessly rotation belt to provide a mat according to the preamble of the claims 1 and 14

Furthermore the invention refers to a plant for the production of boards wich such an apparatus according to claim 12 and a stage of expansion to enhance such apparatuses, especially in plants for the production of boards, according to claim 15.

### BACKGROUND OF THE INVENTION

In the production of boards out of shredded material, there are used predominately flow able or free-flowing particles of differing sizes, mostly containing lignocellulose and/or cellulose, such as fibers, chips and the like. After usually having being provided with binder agents, these particles are discharged out of a dosing or metering hopper and delivered to a spreading head as a spreading apparatus. At least one such apparatus is used as a forming station in combination with an endlessly rotating belt. Through the spreading head, the particles, chips or fibers are spread to form a fleece or mat or layers of these onto a continuously running forming belt, and are then formed to a finished panel in a subsequent pressing station, mostly by heat and pressure.

As for the definition of boards there are mostly particleboards, fiberboards and boards made out of material with greater dimensions than fibers and particles, whereas the greater material is able to be oriented by the scattering apparatus to obtain layers of similar oriented material, mostly length or cross to the working direction, usually referred to as oriented stranded boards (OSB). Fiberboards mostly consists out of fibers, prepared by refiners and preferably glued in a so called blow-line. For particles wood is usually shredded to the demanded size and then mechanically mixed with adhesives or binders in drum mixers and/or are sprayed with binder during their free fall or pneumatic transportation through ducts. In the production of oriented strand boards (OSB) or flake boards depends on in their direction adjustable flakes or strips and mostly by spreading different layers of these, especially with different orientations in the bordering layers.

Next to the use of biological or renewable sources synthetic materials and/or recycled materials are used in the production of boards.

As the production of such boards is getting more and more expensive due to the raw and binding material, producers are interested in solutions to avoid the overuse of material during the production process. Especially the mixing of different material should be avoided during the production of complex boards with several layers. Aside from this requirement usually a formed mat is trimmed before it is pressed into a board and in doing so prepared material is comminuted or damaged due to the trimming machines, for example circular saws or milling cutters.

An disadvantage as well is that several such trimming machines have to be arranged after an spreading or scattering unit to avoid mixing. Accepting the mixing of the material results in only one trimming apparatus at the end of the forming line. Material obtained by the trimming has to be recirculated along the forming line, e.g. for several tenth of meters, or has to be sieved due to its mixing. Material already connected with binders have to be reused as soon as possible to avoid curing ahead of time and before the pressing occurs. Long transportation and especially classifying material in the reusing arrangement are degrading the board properties hence the product.

Next to the use of several trimming stations after scattering devices to avoid mixing of different materials in question the raising of dust of such devices for the environment is problematic as well, not only to the machines nearby and the emerging fire hazard but to the manual workers nearby as well. Especially some binding agents are hazardous in their uncured state.

The problems mentioned above should be addressed by the invention by creating an apparatus and a method for scattering material onto a forming belt a plant for the production of boards with such an apparatus and last but not least a stage of expansion to enhance apparatuses or plants for the production of boards with the features of the invention more easily.

As one of the main aims of the improvements of the invention is to speed up the unmixed recirculation of overspread material, e.g. excess of material, next to the intended with of the mat or the board to be produced. Furthermore the environment should be protected to harmful substances and dust emissions.

### SUMMARY OF THE INVENTION

The problems are solved for such an apparatus, such a method and such a board by the features of the main claims or the use of a stage of expansion set according to the main claim in question.

Regarding the apparatus the invention emanates of an apparatus for scattering material onto an endlessly rotating forming belt to provide a mat or at least one layer of a mat to be pressed into a board,
in which an opening for receiving the material and a mechanical scattering device for the received material is arranged over the forming belt, and
in which side walls along the working direction of the forming belt are arranged which are movable crosswise to the forming belt to define the width w of the mat between the side walls.

The problem is solved for the apparatus by the arrangement of guiding means and/or a conveyor on the outer side of the side walls and preferably adjacent to the side walls whereas the guiding means and/or the conveyor is suitable as a removing device for the excess of material outside of the defined width w and above the forming belt.

The problem is additionally solved for a method for scattering material onto an endlessly rotating forming belt to provide a mat or at least one layer of a mat to be pressed into a board, in which material is sent into an opening of an apparatus with a scattering device and spread onto the forming belt, in which moveable side walls are separating the predetermined width w of the mat from the outer sides near the edges of the forming belt,
by using guiding means and/or conveyors to remove the excess of material outside the side walls or the defined width w of the mat before the excess of material can reach the forming belt.

The following advantages are obtained through the features of the invention:
- exceed of material will be separated immediately and might be returned and reused in the process or the plant, therefore the returning time is minimized;
- mixing of different materials out of different scattering devices or apparatuses can be avoided;
- wear on the forming belt due to scalpers, scrapers or rotating trimming machines is minimized or avoided;
- the forming line or a plant with such forming line is more compact in its structure and can be built shorter, which avoids investment costs;
- less contamination of the environment as the excess material is removed in the closed housing of the apparatus and not afterwards in separate (open) areas;
- most trimming machines compress the edge near the cut or the trimming of the mat edge and therefore causes disturbances in the edge parts of the trimmed mat;
- most trimming machines with rotating edges destroy or disintegrate the excess of material, by reducing the need of trimming machines to a minimum raw material is saved;

The following features are combinable with the main idea of the invention and are able to improve the invention alone or in combination with other features furthermore.

Additionally or alternatively the guiding means and/or the conveyor are arranged between the forming belt and the scattering device in such a way that excess material is captured and/or removed before coming into contact with the forming belt.

In a further aspect of the invention as guiding means a guide plate is arranged. Likewise as conveyor a chain conveyor or an endless belt can be used. In a preferred possibility the chain conveyor and the guide plate are arranged in such a way that the chain conveyor is moving the excess material over the guide plate or a guide plate is arranged as a table under the cross bars of the chain conveyor. An arranged chain conveyor in a collecting pan might not need a separate table or guide plate under the lower chord anyhow.

In another advantageous possibility the guide plate is arranged in such a way that the excess material is moved perpendicular or angular to the working direction. Alternatively or additionally the conveyor, especially a chain conveyor, is arranged in such a way that the excess material is transported in, against or perpendicular to the working direction of the forming belt.

In another preferred aspect the moving or transporting means of the conveyor are arranged parallel or angular to the plane of the forming belt.

Preferably in the chain conveyor the cross bars are arranged crosswise or angular to the working direction of the forming belt and/or the chain.

Preferably adjacent to the side walls a collecting pan is arranged wherein the conveyor, especially the chain conveyor, for the excess material is located. The collecting pan can one or several openings to dispense the material into the second or following up collecting and/or transporting means.

Preferably these further collecting and/or transporting means for the excess material are arranged in such a way that they are receiving the excess material from the guiding means and/or the conveyor adjacent to the side walls. These mainly are used, usually with help of further transporting means, in reusing the excess material in the apparatus, the plant or the production process..

In a preferred embodiment of the such an apparatus the scattering device is suitable to scatter the material onto the forming belt in an oriented manner, whereupon especially a crosswise and/or lengthwise orienting scattering device is arranged. The arrangement of the features of the invention in combination with the production of oriented stranded boards is the most preferred one.

In a further aspect there might be at least two different scattering devices arranged in the apparatus and in doing so at least two different conveyors are arranged. To avoid different conveyors a chain conveyor might be usefully arranged in such a way, that the upper chord and the lower chord are transporting the excess material in different directions, especially by using a table under the upper chord. Usually the lower cord uses a separate support under their cross bars for the movement of the excess material as well. Preferably the chain conveyor is arranged in a collecting pan.
Preferably the upper chord is not supported for the first material over its whole length to allow the second material to reach the lower chord area.

Additionally or alternatively the chain conveyor is guided in the area of the scattering device in such a way that the distance between the upper chord and the lower chord is minimalized and/or the distance between the upper chord and the lower chord is smaller than the diameter of the drive or reverse rollers. In a most preferred embodiment the height of the conveyor and/or the guiding means should be minimized as low as possible to be able to lower the scattering device near to the surface of the already existing mat on the endless belt or to the belt itself. Usually the scattering devices are movable up and down in view of the forming belt beneath.

The problem for a plant for the production of boards with a forming station consisting at least out of an apparatus for spreading material onto an endlessly rotating forming belt to provide a mat to be pressed into a board might be solved by arranging an apparatus as described above in the forming station for the production of at least one layer of the mat.

Preferably a cycle or continuous working press is arranged in such plant, whereas transporting units or the forming belt are positioned in such a way that it is possible to transfer at least parts of the mat into the press.

To retrofit existing plants or apparatuses without the advantageous invention a stage of expansion is created by the invention for an apparatus for scattering material with a scattering device onto an endless rotating forming belt to provide a mat or a plant for the production of boards with at least one such apparatus, wherein such stage of expansions consists out of an arrangement of guiding means and/or conveyors suitable for removing the excess of material outside of the defined width w of the mat over the forming belt during the spreading of the material by the scattering device, preferably with moveable side walls for defining the width of the mat if not already mounted in the apparatus, whereat the arrangement is mountable into the apparatus between the forming belt and the spreading device.

### Definitions and other advancements of the invention:

Even if adjacent to the sidewalls conveyors are used to remove the excess of material from meeting the endless forming belt it is possible to arrange the scattering device near the forming belt. It has been surprisingly noticed that, especially by scattering devices used for orientation, that a falling distance to great between the scattering device and the forming belt might cause a reorientation of the material and hence quality losses in the product. Due to the invention expensive raw material for oriented stranded boards can be saved and reused without mixing these into an unsorted fraction.

A very special aspect using a chain conveyor develops with different scattering devices or spreading units. In such cases it is possible to use the upper and the lower chord for different excess materials which can be moved into different directions and may be reused without mixing.

It has to be clarified, that the removing unit (guiding means and/or conveyor) are used near the forming belt whereas in the meantime the material falling onto the forming belt into the width area of the mat to be pressed.

The guide plate is suitable and arrange able in different ways and functions. It can be used as a cover or pre-guiding means to help the excess of material to be moved perpendicular to the working direction. As such the guide plate can be arranged on the upper end of the side wall, mostly in an angular manner in view of the vertical side wall. Especially for material able to be oriented by scattering devices, e.g. flakes, such guide plate may be arranged not only to guide the falling flakes away to the outer sides of the forming belt but also to help the apparatus to change or compensate the edges of the mat near the side walls by lowering or increasing the width defined by the side walls. This deems necessary if greater flakes are used which are easily swayed to fall to the outer side of the walls. On the other hand the guide plate can be used to cover up conveyor mechanisms partly and adjacent to the walls to prevent malfunctions due to the material. Last but not least the guide plate can be used as support for the conveyor whereupon the material is moved by the conveyor on the guide plate or the guide plate is supporting the moving parts of the conveyor, especially if the conveyor has to be built as small as possible and to

The area for the excess material is covered by the guiding means and/or a conveyor as to prevent the excess of material to fall onto the forming belt. After the movement of the excess material due to the first means the material has to be further collected or transported by second means, named collecting and/or transporting means. For such purposes a hopper or other conveying means can be arranged next to the apparatus and/or the forming belt for the excess material for further processing. Therefore the invention differentiates between the first guiding and/or transporting means and the second or further collecting and transporting means for the excess material.

In one example the excess material can fall down directly along the extent of the spreading device - along the edges of the belt - into a hopper, a conveyor or transporting screw. Alternatively the first conveying means, removing or transporting the excess material adjacent to the side walls are extracting the excess material on certain points to second transporting means for further processing the excess material, like reusing the material and transporting it to material bunkers or inserting the excess material into or before the apparatus into the production, again.

The scattering device is preferably a mechanical scattering device with rotatable rollers or drive shafts. For scattering fibers or particles there might be spikes or ridges mounted on the surface of the rollers. For length orienting devices discs are arranged normal to the shafts and for cross orienting devices usually rollers with radial blades aligned along the axis, comparable to a centrifugal fan, are used. Nevertheless even in wind spreading chambers, without a mechanical scattering device but an inlet for spreading material due to sifting effects and usually arranged screens in the airflow the configuration of the invention might be usable to adjust the width of the mat or a layer of a mat and to remove the excess material easily. Such use might be especially advantageous with apparatuses later in a forming line, for example for the last surface layer above other layers.

### DETAILED DESCRIPTION OF THE INVENTION

In the following, the invention will be described in more detail by the aid of some preferred embodiments with reference to the attached drawings, wherein:
- Fig. 1: presents a sectional view lengthwise to the production direction of an apparatus in which the invention is used.
- Fig. 2: presents a sectional view crosswise to the production direction over the width w of the mat according to Fig. 1 and to display the arrangement and the area of the excess material to be relocated.
- Fig. 3: presents a magnificated cutout of Fig. 2 with the guiding means and a conveyor presenting a first preferred embodiment of the invention.
- Fig. 4: presents a second preferred embodiment likewise shown as Fig. 3.
- Fig. 5: presents a third preferred embodiment likewise shown as Fig. 3.
- Fig. 6: presents a fourth preferred embodiment based on the first preferred embodiment.

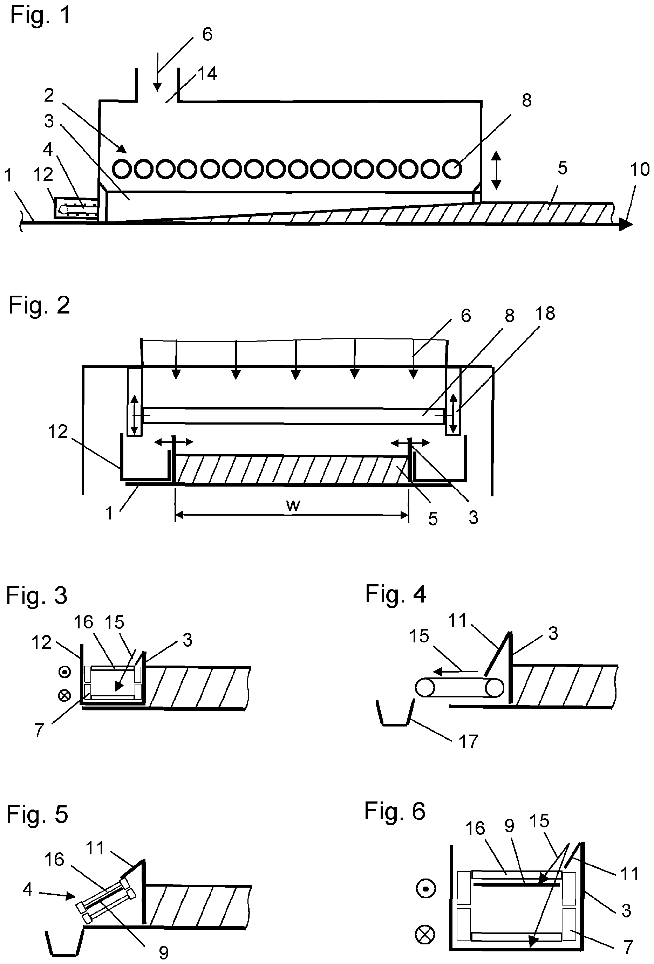

Fig. 1 presents a sectional view lengthwise to the production direction of an apparatus in which the invention is used. The apparatus consists mainly out of a housing, in which from above material 6 can enter the housing through an opening 14. Below the opening 14 at least an scattering device 2 is arrange, usually consisting out of driven rollers 8. The material is spread onto the forming belt 1 moving in the production direction 10 under the rollers 8 and a mat 5 or a layer of a mat is building up on the forming belt 1. An double arrow symbolizes the optional ability to move the scattering device 2 up and down. Due to the sectional view a side wall 3 can be seen behind the increasing mat 5. Behind the side wall, only visible on the left side of the house a conveyor is arranged and in this embodiment shown as chain conveyor 4. Preferably on this end an outlet (not shown) from the housing of the chain conveyor 4 is arranged to lead the drawn out excess material 15 to the next collecting and/or transporting means 17 (not shown in Fig. 1).

In Fig. 2 a sectional view crosswise to the production direction 10 over the width w of the mat according to Fig. 1 is displayed. Again the down movement of the material 6 is shown by the arrows onto the scattering device 2. As the rollers 8 are aligning in the normal plane to the drawing plane only one roller 8 is displayed. The power units (not shown) for the rotation of the rollers 8 are usually arranged in the suspension 18 left and right to the rollers as is the lifting unit for the scattering device 2, shown by double arrows left and right.

Between the roller 8 and the forming belt 1 moving along the scattering device in or out of the image plane move able (double arrows) side walls 3 are arranged and are defining in-between the width w of the mat 5. As the material flow of the material 6 is wider than the width w between the walls 3 any excess of material 15 outside the side walls 4 will be falling into the collecting pan 12. In this collecting pan 12 an conveyor is arranged which moves the excess material 15 in or against the production direction 12 and to an outlet (not shown) to eject the excess material to further collecting and/or transporting means (not shown in Fig. 2).

In the Fig. 3 to 6 different preferred embodiments are shown for the conveyor and the guiding means, usually shown as guide plates 11. The difference might be that the guiding means might be of passive nature whereas the conveyers have actively moving parts. Still the passive nature might vibrate to support the movement of the excess material 15.

Fig. 3 shows a chain conveyor 4 consisting out of two endlessly rotating chains 7 with the chains 7 connecting cross bars 16. The chains 7 are usually driven by sprockets (not shown) and the connecting cross bars 16 are providing the movement of the excess material 15 along the collecting pan 12. The falling movement and direction of the excess material is shown as arrow. As small optional guide plate covers the right side of the chain in the upper chord of the chain conveyor. Instead of the chain conveyor an endless belt could be arranged as well, but as such the material transport have to be on the upper side or upper chord of the belt.

In comparison the conveyor belt has a higher structure, but the transfer to a cross conveyer to leave the area of the forming belt 1 with the excess material 15 is easier. In contrast thereto a chain conveyor is able to move the excess material 15 in the lower part of the collecting pan 12, as shown by the arrow corresponding to the excess material 15, by using the momentum of the lower chord of the conveyor. Therefore the structure of the collecting pan 12 and the side walls 3 can be built less high and the scattering device can be arranged lower and therefore more near to the forming belt 1.

In a second preferred embodiment according to Fig. 4 a longer guide plate 11 is arranged onto the side wall to guide the excess material 15 onto an endless belt rotating around two drive shafts. The upper chord is rotating as the moving arrow of the excess material 15 is showing to the left. Therefore the excess material is transported to a second conveyor, named as collecting and/or transporting means 17. The difference to the former embodiment is mainly that the collecting and/or transporting means 17 are arranged along the production direction 10 and the whole length of the scattering device 2, hence the rollers 8. As the material is only transported over a relatively short distance in comparison to conveyors of the other embodiments it can be built in a small height as well. Especially the amount of material per square footage is relatively small.

The third preferred embodiment according to Fig. 5 shows an chain conveyor 4, rotating around a table 9. The excess material 15 is gliding along the guide plate 11 onto the conveyor and is moved according to the first embodiment (Fig.1 ) in or against the working direction and is delivered to the further collecting and/or transporting means 17 at one of the ends of the scattering device 2 or the housing of the apparatus. Alternatively the movement of the conveyor is used to let the excess material directly into collecting and/or transporting means 17 which are arranged along the scattering device 2.

In the last but not limiting fourth embodiment the invention is carried out according to the first embodiment with a chain conveyor 4. As a table 9 is arranged partly under the upper chord of the conveyor 4 the material is falling either onto the table 9 and is moved by the upper chord of the conveyor out of the image plane (arrowhead symbol on the left), whereas the excess material in the area of the conveyor without a table 9 is falling to the lower chord and is moved by the cross bars 16 into the image plane (cross symbol on the left). With such an arrangement it is possible to move different excess materials 15 from any sorting or classifying scattering device 2 or different scattering devices accordingly without mixing them.

### List of references: SF1002EP

- 1: forming belt
- 2: scattering device
- 3: walls
- 4: chain conveyor
- 5: mat
- 6: material
- 7: chain
- 8: rollers
- 9: table
- 10: working direction
- 11: guide plate
- 12: collecting pan
- 14: opening
- 15: excess of material
- 16: cross bars (of 4)
- 17: collecting and/or transporting means
- 18: suspension

## Claims

1. Apparatus for scattering material onto an endlessly rotating forming belt to provide a mat or at least one layer of a mat to be pressed into a board,
in which an opening (14) for receiving the material (6) and a mechanical scattering device (2) for the received material (6) is arranged over the forming belt (1), and
in which side walls (3) along the working direction (10) of the forming belt (1) are arranged which are movable crosswise to the forming belt to define the width (w) of the mat (5) between the side walls (3), **characterized in that**
on the other side of the side walls (3) hence the defined width (w) guiding means and/or a conveyor is arranged adjacent to the side walls (3) which are suitable as a removing device for the excess of material (15) outside of the defined width (w) and above the forming belt (1).

2. Apparatus according to claim 1, **characterized in that**
the guiding means and/or the conveyor are arranged between the forming belt (1) and the scattering device (2) in such a way that excess material (15) is captured and/or removed before coming into contact with the forming belt (1).

3. Apparatus according to at least one of the preceding claims, **characterized in that** as a guiding means a guide plate (11) and/or as conveyor a chain conveyor (4) or an endless belt is arranged, whereupon in a preferred embodiment the chain conveyor and the guide plate (11) are arranged in such a way that the chain conveyor is moving the excess material over the guide plate (11) or a table (9).

4. Apparatus according to the preceding claim, **characterized in that** the guide plate (11) is arranged in such a way that the excess material (15) is moved perpendicular or angular to the working direction (10) and/or **that** the conveyor, especially a chain conveyor (4), is arranged in such a way that the excess material (15) is transported in, against or perpendicular to the working direction (10) of the forming belt (1).

5. Apparatus according to at least one of the preceding claims, **characterized in that** the moving or transporting means of the conveyor are arranged parallel or angular to the plane of the forming belt (1).

6. Apparatus according to at least one of the preceding claims, **characterized in that** in the chain conveyor (4) the cross bars (16) are arranged crosswise or angular to the working direction (10) of the forming belt (1) and/or the chain.

7. Apparatus according to at least one of the preceding claims, **characterized in that** adjacent to the side walls (3) a collecting pan (12) is arranged wherein the conveyor, especially the chain conveyor (4), for the excess material (15) is located.

8. Apparatus according to at least one of the preceding claims, **characterized in that** further collecting and/or transporting means (17) for the excess material (15) are arranged in such a way that they are receiving the excess material (15) from the guiding means and/or the conveyor adjacent to the side walls (3).

9. Apparatus according to at least one of the preceding claims, **characterized in that** the scattering device (2) is suitable to scatter the material (6) onto the forming belt (1) in an oriented manner, whereupon especially a crosswise and/or lengthwise orienting scattering device is arranged.

10. Apparatus according to at least one of the preceding claims, **characterized in that** at least two different scattering devices (2) are arranged in the apparatus and in doing so at least two different conveyors are arranged or a chain conveyor is arranged in such a way,
that the upper chord and the lower chord are transporting the excess material in different directions, especially by using a table (9) under the upper chord.

11. Apparatus according to at least one of the preceding claims, **characterized in that** in the area of the scattering device (2) the chain conveyor is guided in such a way that the distance between the upper chord and the lower chord is minimalized and/or the distance between the upper chord and the lower chord is smaller than the diameter of the drive or reverse rollers.

12. Plant for the production of boards with a forming station consisting at least out of an apparatus for spreading material onto an endlessly rotating forming belt to provide a mat to be pressed into a board,
**characterized in that** an apparatus according to claim 1 is arranged in the forming station for the production of at least one layer of the mat.

13. Plant according to the claim before, **characterized in that** a cycle or a continuously working press is arranged, whereas transporting units or the forming belt are positioned to transfer at least parts of the mat into the press.

14. Method for scattering material onto an endlessly rotating forming belt to provide a mat or at least one layer of a mat to be pressed into a board, in which material (6) is sent into an opening (14) of an apparatus with a scattering device (2) and spread onto the forming belt (1), in which moveable side walls (3) are separating the predetermined width (w) of the mat (5) from the outer sides near the edges of the forming belt (1), **characterized in that** guiding means and/or conveyors are removing the excess of material (15) outside the side walls (3) or the defined width (w) of the mat before the excess of material (15) can reach the forming belt (1).

15. Stage of expansion for an apparatus for scattering material with a scattering device onto an endless rotating forming belt to provide a mat or a plant for the production of boards with at least one such apparatus, **characterized in that**
an arrangement of guiding means and/or conveyors suitable for removing the excess of material (15) outside of the defined width (w) of the mat over the forming belt (1) during the spreading of the material by the scattering device,
preferably with moveable side walls (3) for defining the width of the mat if not already mounted in the apparatus,
whereat the arrangement is mountable into the apparatus between the forming belt and the spreading device.
